# EUROPEAN PATENT APPLICATION

(11) **EP 3 346 755 A1**
(43) Date of publication of application: **11.07.2018**
(21) Application number: 16841922.4
(22) Date of filing: 31.08.2016
(51) Int. Cl.: H04W 28/06, H04W 72/04, H04W 72/12

(54) **USER TERMINAL, RADIO BASE STATION AND RADIO COMMUNICATION METHOD**

(30) Priority: 02.09.2015 JP 2015173257
(71) Applicant: NTT DOCOMO, INC., Chiyoda-ku Tokyo 100-6150 (JP)
(72) Inventor: TAKEDA, Kazuaki, Tokyo 100-6150 (JP); HARADA, Hiroki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2016/075563
(87) International publication number: WO 2017/038892

(57) **Abstract**

The present invention is designed so that communication is carried out in an appropriate manner even in an environment concurrently using transmission time intervals (TTIs) of different lengths, a user terminal according to an embodiment of the present invention includes a control unit for determining the structures of the TTIs contained in one subframe of existing systems, and a reception unit for receiving a reference signal and data in at least one of the TTIs. The reception unit receives a cell-specific reference signal in each of the TTIs using a radio resource to which the cell-specific reference signal is allocated in the existing systems.

## Description

### Technical Field

The present invention relates to a user terminal, a radio base station, and a radio communication method in next-generation mobile communication systems.

### Background Art

In Universal Mobile Telecommunications System (UMTS) networks, Long Term Evolution (LTE) is specified for the purpose of providing increased data rates, reduced delay, and the like (non-patent document 1). To achieve further broadbandization and increased speed beyond LTE, successor systems to LTE, e.g. LTE-Advanced (LTE-A), Future Radio Access (FRA), 5th generation mobile communication system (5G), and New Radio Access Technology (New-RAT) are studied.

In LTE Releases 10 and 11, Carrier Aggregation (CA), which aggregates multiple component carriers (CCs), is introduced in order to achieve broadbandization. Each CCs is constituted in units of system bandwidths of LTE Release 8. In CA, the CCs from a single radio base station (eNodeB: eNB) are allocated to a user terminal (User Equipment: UE).

In LTE Release 12, Dual Connectivity (DC), which allocates multiple Cell Groups (CGs) from different radio base stations (eNBs) to a user terminal (UE), is introduced. Each CG is constituted of at least one cell (CC). Since DC aggregates the CCs from the different eNBs, DC is also referred to as Inter-eNB CA and the like.

In LTE Releases 8 to 12, a transmission time interval (TTI) is set at 1 ms in downlink (DL) and uplink (UL) transmissions between radio base stations and user terminals. In LTE systems (Releases 8 to 12), the TTI is also referred to as a subframe length.

### Citation List

### Non-Patent Literature

Non-patent literature 1: 3GPP TS 36.300 "Evolved Universal Terrestrial Radio Access (E-UTRA) and Evolved Universal Terrestrial Radio Access Network (E-UTRAN); Overall description; Stage 2"

### Summary of Invention

### Technical Problem

Radio communication systems of LTE Release 13 or later (for example, 5G) envision communication in high frequency bands of several tens of GHz, and communication of the relatively small amounts of data such as Internet of Things (IoT), Machine Type Communication (MTC), and Machine To Machine (M2M). Demands for Device To Device (D2D) and Vehicular To Vehicular (V2V), which require short delay communication, have been increasing.

To offer sufficient communication services in the future radio communication systems, reduction in communication delay (latency reduction) has been studied. For example, it has been studied that a transmission time interval (TTI), which is a minimum time unit in scheduling, is reduced from 1 ms used in existing LTE systems (LTE Releases 8 to 12) and communication is performed at the short TTIs.

However, concrete signal and channel structures when using short TTIs have not been studied yet. When using both conventional TTIs and short TTIs (including the case of switching the TTIs), how to control communication becomes a problem. It is necessary to establish a communication control method appropriate for short TTIs, when, for example, UE is connected to multiple cells using different TTIs (having different TTI lengths).

Considering the above, one of objects of the present invention is to provide a user terminal, a radio base station, and a radio communication method that can perform communication in an appropriate manner even in an environment concurrently using TTIs of different lengths.

### Solution to Problem

A user terminal according to an aspect of the present invention includes a control unit for determining the structures of transmission time intervals (TTIs) contained in one subframe of existing systems, and a reception unit for receiving a reference signal and data in at least one of the TTIs. The reception unit receives a cell-specific reference signal in each of the TTIs using a radio resource to which a cell-specific reference signal is allocated in the existing systems.

### Advantageous Effects of Invention

According to the present invention, it is possible to perform communication in an appropriate manner even in an environment concurrently using TTIs of different lengths.

### Brief Description of Drawings

Figure 1 is an explanatory view of a TTI in existing LTE systems;
Figure 2 is an explanatory view of a normal TTI and a short TTI;
Figure 3A is a drawing depicting a first example of the structure of the short TTI;
Figure 3B is a drawing depicting a second example of the structure of the short TTI;
Figure 4A is a drawing depicting a first example of the configuration of the short TTIs;
Figure 4B is a drawing depicting a second example of the configuration of the short TTIs;
Figure 4C is a drawing depicting a third example of the configuration of the short TTIs;
Figure 5A is a drawing depicting an example of radio resource mapping in a TTI structure according to a first embodiment;
Figure 5B is a drawing depicting another example of radio resource mapping in the TTI structure according to the first embodiment;
Figure 6A is a drawing depicting an example of radio resource mapping in a TTI structure according to a second embodiment;
Figure 6B is a drawing depicting another example of radio resource mapping in the TTI structure according to the second embodiment;
Figure 7 is a drawing depicting an example of radio resource mapping in a TTI structure according to a third embodiment;
Figure 8A is a drawing depicting an example of radio resource mapping in a TTI structure according to a fourth embodiment;
Figure 8B is a drawing depicting another example of radio resource mapping in the TTI structure according to the fourth embodiment;
Figure 9A is a drawing depicting an example of radio resource mapping in a TTI structure according to a fifth embodiment;
Figure 9B is a drawing depicting another example of radio resource mapping in the TTI structure according to the fifth embodiment;
Figure 10 is a drawing depicting an example of the schematic structure of a radio communication system according to an embodiment of the present invention;
Figure 11 is a drawing depicting an example of the entire configuration of a radio base station according to an embodiment of the present invention;
Figure 12 is a drawing depicting an example of the functional configuration of the radio base station according to the embodiment of the present invention;
Figure 13 is a drawing depicting an example of the entire configuration of a user terminal according to an embodiment of the present invention; and
Figure 14 is a drawing depicting an example of the functional configuration of the user terminal according to the embodiment of the present invention.

### Description of Embodiments

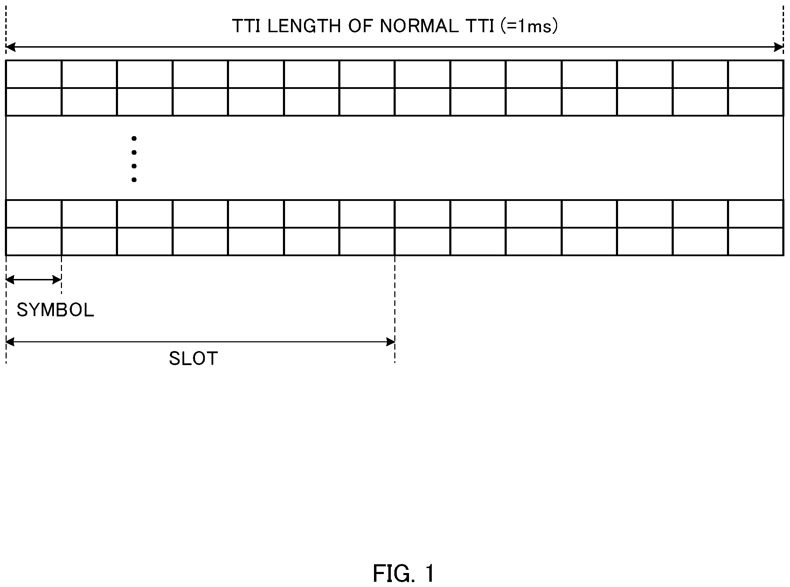

Figure 1 is an explanatory view of a TTI in existing LTE systems. As depicted in Figure 1, in LTE Releases 8 to 12, a TTI (may be referred to as e.g. a normal TTI) has a time length of 1 ms. The normal TTI is also referred to as a subframe. The normal TTI is constituted of two time slots of 0.5 ms. The normal TTI is a transmission time unit of one channel-coded data packet (transport block), and is a processing unit of scheduling, link adaptation, and the like.

Figure 1 depicts a subframe structure having normal cyclic prefixes (CPs). For example, in a downlink (DL) using the normal CPs, the normal TTI is constituted of fourteen orthogonal frequency division multiplexing (OFDM) symbols (seven OFDM symbols per slot). Each OFDM symbol has a time length (symbol length) of 66.7 µs and a normal CP of 4.76 µs. Since a subcarrier interval is the reciprocal of the symbol length, when the symbol length is 66.7 µs, the subcarrier interval is 15 kHz.

In an uplink (UL) using the normal CPs, the normal TTI is constituted of fourteen single carrier frequency division multiple access (SC-FDMA) symbols (seven SC-FDMA symbols per slot). Each SC-FDMA symbol has a time length (symbol length) of 66.7 µs and a normal CP of 4.76 µs. Since a subcarrier interval is the reciprocal of the symbol length, when the symbol length is 66.7 µs, the subcarrier interval is 15 kHz.

When using extended CPs, the normal TTI may be constituted of twelve OFDM symbols (or twelve SC-FDMA symbols). In this case, each OFDM symbol (or each SC-FDMA symbol) has a time length of 66.7 µs and an extended CP of 16.67 µs.

By the way, a radio interface appropriate for high frequency bands of several tens of GHz and a radio interface for minimizing a delay in IoT, MTC, M2M, D2D, V2V, and the like are required of future radio communication systems of LTE Release 13 or later, 5G, and the like.

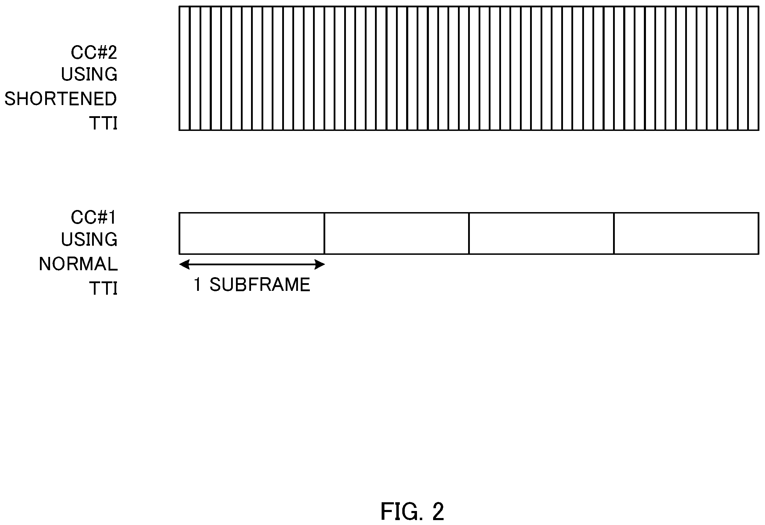

Thus, in the future radio communication systems, communication may be performed using a TTI (may be referred to as e.g. a short TTI) shorter than 1 ms. Referring to Figure 2, a short TTI will be described. Figure 2 is an explanatory view of a normal TTI and a short TTI. Figure 2 depicts a cell (CC #1) using a normal TTI (1 ms) and a cell (CC #2) using a short TTI. When using the short TTI, a subcarrier interval may be changed (for example, increased) from that when using the normal TTI.

When using the TTI (short TTI) shorter than the normal TTI, an increase in a processing (e.g., encoding and decoding) time margin in user terminals and radio base stations allows a reduction in a processing delay. Using the short TTI also allows an increase in the number of accessible user terminals per unit of time (for example, 1 ms). The structure of the short TTI and the like will be described below.

### (Examples of Structure of Short TTI)

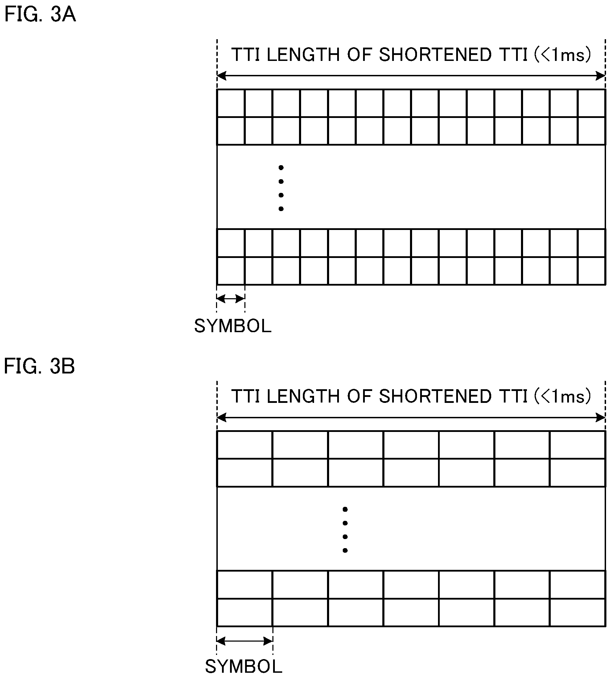

Examples of the structure of the short TTI will be described with reference to Figures 3A and 3B. Figures 3A and 3B depict examples of the structure of the short TTI. As depicted in Figures 3A and 3B, the short TTI has a time length (TTI length) shorter than 1 ms. The short TTI may have a TTI length of, for example, 0.5 ms, 0.25 ms, 0.2 ms, or 0.1 ms, the integral multiple of which is 1 ms. This allows introducing the short TTI while maintaining compatibility with the normal TTI of 1 ms. The short TTI may be constituted in units of symbols (for example, 1/14 ms).

Figures 3A and 3B describe the case of using normal CPs as examples, but the invention is not limited thereto. The short TTI may have any length as long as it is shorter than the normal TTI, and may have any structure as to the number of symbols, the length of each symbol, and the length of each CP. OFDM symbols are used in a DL and SC-FDMA symbols are used in an UL in the following description, but the invention is not limited thereto.

Figure 3A depicts a first example of the structure of the short TTI. In the first example, as depicted in Figure 3A, the short TTI is constituted of fourteen OFDM symbols (or SC-FDMA symbols) the number of which is the same as that of the normal TTI. Each OFDM symbol (or each SC-FDMA symbol) has a symbol length shorter than the symbol length (=66.7 µm) of the normal TTI.

When shortening the symbol length while maintaining the number of the symbols of the normal TTI, as depicted in Figure 3A, a physical layer signal structure of the normal TTI can be shared. When shortening the symbol length while maintaining the number of the symbols of the normal TTI, the amount of information (the number of bits) contained in the short TTI is reduced, as compared with the normal TTI, due to an increase in subcarrier intervals.

Figure 3B depicts a second example of the structure of the short TTI. In the second example, as depicted in Figure 3B, the short TTI is constituted of a lesser number of OFDM symbols (or SC-FDMA symbols) than in the normal TTI. Each OFDM symbol (or each SC-FDMA symbol) has the same symbol length as the symbol length (=66.7 µm) of the normal TTI. For example, in Figure 3B, the short TTI is constituted of seven OFDM symbols (or SC-FDMA symbols), which is half the number of the symbols of the normal TTI.

When reducing the number of the symbols while maintaining the symbol length, as depicted in Figure 3B, the amount of information (the number of bits) contained in the short TTI is reduced, as compared with the normal TTI. A user terminal can perform reception processing (e.g., demodulation, decoding, and measurement) of signals contained in the short TTI in a shorter time than for the normal TTI, thus allowing a reduction in a processing delay. The signals contained in the short TTI of Figure 3B can be multiplexed on signals of the normal TTI in the same CC (for example, orthogonal frequency division multiplexing: OFDM), thus allowing maintaining compatibility with the normal TTI.

### (Examples of Configuration of Short TTIs)

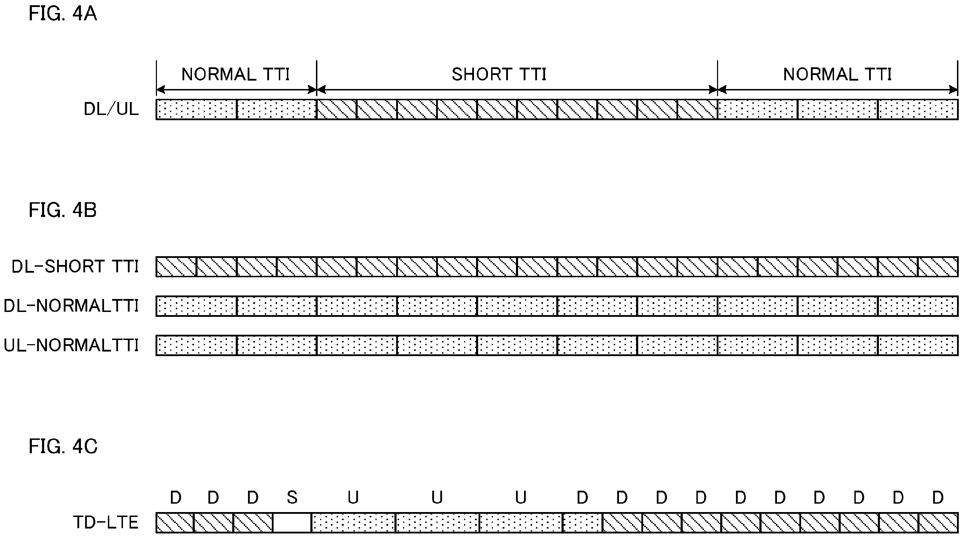

Examples of the configuration of the short TTIs will be described. When using the short TTIs, a user terminal may be configured for the normal TTI and the short TTI so as to have compatibility with LTE Releases 8 to 12. Figures 4A to 4C depict examples of the configuration of the normal TTIs and the short TTIs. Note that, Figures 4A to 4C depict merely examples, and the configuration of the TTIs is not limited thereto.

Figure 4A is a drawing of a first example of the configuration of the short TTIs. As depicted in Figure 4A, the normal TTIs and the short TTIs may be temporally mixed in a single component carrier (CC) (a single frequency band). To be more specific, the short TTIs may be configured in a specific sub frame (or specific radio frame) of the single CC. For example, the short TTIs may be configured in a multicast broadcast single frequency network (MBSFN) subframe, or a subframe that contains (or does not contain) a specific signal such as broadcast information (e.g., master information block (MIB)) and a synchronization signal.

In Figure 4A, the short TTIs are configured in continuous five subframes (corresponding to five normal TTIs) of the single CC, while the normal TTIs are configured in the other subframes. The number and positions of the subframes in which the short TTIs are configured are not limited to the example of Figure 4A.

Figure 4B is a drawing of a second example of the configuration of the short TTIs. As depicted in Figure 4B, CCs of the normal TTIs and a CC of the short TTIs may be aggregated in Carrier Aggregation (CA) or Dual Connectivity (DC). To be more specific, the short TTIs may be configured in a specific CC (more specifically, a DL and/or UL of the specific CC).

In Figure 4B, the short TTIs are configured in the DL of the specific CC, while the normal TTIs are configured in a DL and UP of the other CC. The number and positions of the CCs in which the short TTIs are configured are not limited to the example of Figure 4B.

In CA, the short TTIs may be configured in a specific CC (a primary (P) cell or/and secondary (S) cell) from a single radio base station. In DC, on the other hand, the short TTIs may be configured in a specific CC (a P cell or/and S cell) in a master cell group (MCG) formed by a first radio base station, or a specific CC (a primary secondary (PS) cell or/and S cell) in a secondary cell group (SCG) formed by a second radio base station.

Figure 4C is a drawing of a third example of the configuration of the short TTIs. As depicted in Figure 4C, the short TTIs may be configured in any of a DL and UL. For example, in Figure 4C, the normal TTIs are configured in the UL, while the short TTIs are configured in the DL in a time division duplex (TDD) system.

A specific channel or signal in a DL or UL may be allocated (configured) in the short TTI. For example, a physical uplink control channel (PUCCH) may be allocated in the normal TTI, while a physical uplink shared channel (PUSCH) may be allocated in the short TTI.

A multi-access scheme different from OFDM (or SC-FDMA), which is a multi-access scheme for LTE Releases 8 to 12, may be allocated in the short TTI.

As described above, in the future radio communication systems, it is assumed that the short TTI that is shorter than the normal TTI is applied to an UL transmission and/or DL transmission. The inventors have focused on the fact that in transition to the future radio communication systems, the short TTI and the TTI (normal TTI) for existing systems are likely to be concurrently used, as depicted in Figures 4A to 4C.

Thus, the inventors have come up with the idea of performing communication with a radio resource structure that has an affinity for a downlink radio resource structure of the existing LTE systems, even when using the short TTI. To be more specific, the inventors have conceived to define a plurality of TTIs by dividing one subframe of the existing systems, and to use as many signal configurations (radio resource mapping patterns) allocated in the existing systems as possible.

This structure makes it possible for, for example, a single cell (eNB) to control communication using a plurality of TTIs by synchronizing the short TTIs and the normal TTIs, and to achieve the sufficient effect of the short TTIs on a reduction in delay.

Embodiments of the present invention will be described below in detail with reference to the attached drawings. In the following description, a transmission unit having a time length shorter than the normal TTI (1 ms) is referred to as a short TTI, but the name is not limited thereto. The following description takes an LTE system as an example, but the present invention may be applied to another system.

In the following description, symbols allocated to a downlink control channel (e.g., PDCCH), in other words, symbols numbered 0 to 2 of a first slot in one subframe of existing systems do not constitute any TTI and/or any TTI length, but the invention is not limited thereto. For example, in the following description, the symbols allocated to the downlink control channel may be included in a first TTI in the one subframe of the existing systems. Furthermore, symbols allocated to specific signals (for example, cell-specific reference signals (CRSs) and synchronization signals including a primary synchronization signal (PSS) and a second synchronization signal (SSS)) may not constitute any TTI and/or any TTI length.

In the following description, normal CPs are inserted in the normal TTI, by way of example. However, the present invention is applicable as well when inserting extended CPs, with reference to this application. Radio communication methods according to the embodiments may be applied separately, or in combination with each other.

### (Radio Communication Method)

### [First Embodiment]

In a first embodiment of the present invention, UE performs reception processing at a plurality of TTIs (two TTIs) each of which is constituted of one slot in one subframe of existing systems. To be more specific, in the first embodiment, the TTIs include a first TTI that starts from a symbol numbered 3 of a first slot in the one subframe of the existing systems and has a length of four symbols, and a second TTI that starts from a symbol immediately next to the first TTI and has a length of seven symbols.

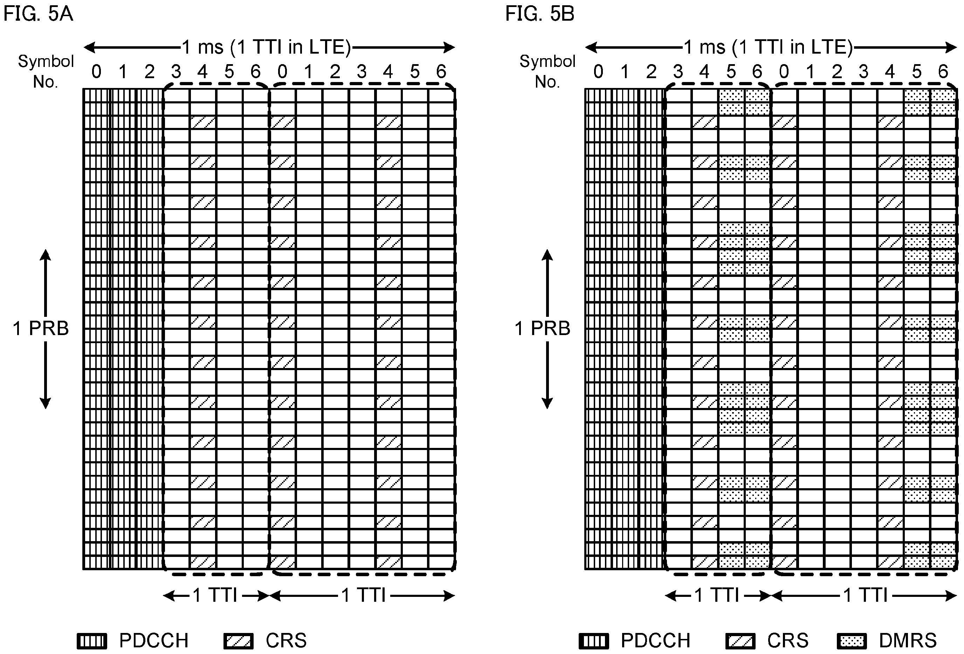

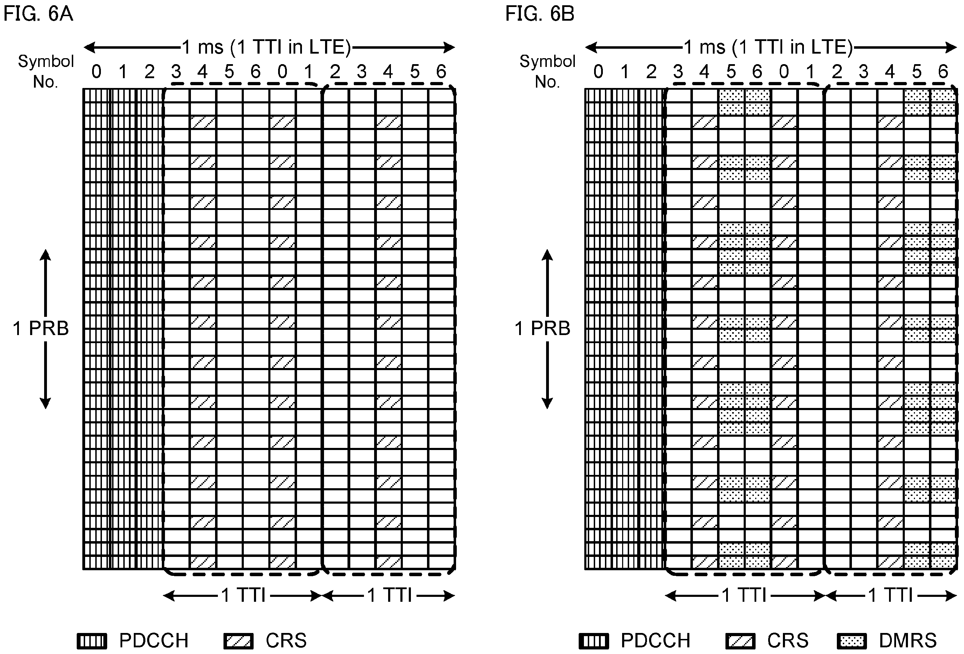

Figures 5A and 5B are drawings depicting examples of radio resource mapping in the TTI structure according to the first embodiment. Figures 5A and 5B depict symbols (fourteen symbols) contained in one subframe of existing systems, in frequency bands (three physical resource blocks (PRBs)) in which the short TTIs are set to certain UE. In the other frequency resources that are not depicted, short TTIs may be set for other UE, or a normal TTI may be set. Figures 6A to 9B also depict radio resource mapping in three PRBs × fourteen symbols, as well as Figures 5A and 5B. However, resource mapping according to the present invention is not limited thereto.

The following is a flow for setting the short TTIs in UE. First, the UE transmits a UE capability to perform transmission using the short TTIs and/or a UE capability for a delay reduction function to an eNB. The eNB that has received the UE capability informs the UE of information about the short TTI structure (e.g. start symbols of the short TTIs, the numbers of symbols, the number of PRBs, and the like) by higher layer signaling (e.g., RRC signaling), downlink control information, or a combination thereof. The UE identifies the TTI structure based on the information, determines radio resources to be communicated in the short TTIs based on the TTI structure, and controls transmission and/or reception processing.

The identification of the TTI structure (short TTI structure) includes, for example, to identify a time resource (time length), a frequency resource (PRB and the like), and the like of each short TTI and to identify a signal structure to be transmitted in each short TTI. This flow may be used in the same manner in the other embodiments.

The UE may receive scheduling information of data (e.g., a DL grant, an UL grant, and the like) that is to be transmitted and/or received in at least one of the TTIs, on a PDCCH just as with the existing systems, or on an EPDCCH in any of the TTIs (for example, in a first TTI). Based on the received DL grant, the UE may receive data on a physical downlink shared channel (PDSCH) in at least one of the TTIs. Based on the received UL grant, the UE may transmit data on a physical uplink shared channel (PUSCH) in at least one of the TTIs.

As depicted in Figure 5A, the first embodiment uses the same resource mapping of PDCCH regions and CRSs as in the existing systems. In this case, the UE receives the CRS in each TTI. The CRSs are preferably generated from the same sequences as in the existing systems, but may be generated from different sequences. The same goes for CRSs in the other Figures.

As depicted in Figure 5B, the first embodiment uses the same resource mapping of DMRSs as in the existing systems. The DMRSs are mapped to demodulate data in the UE in Transmission Modes (TMs) 9, 10, and the like. The DMRSs are preferably generated from the same sequences as in the existing systems, but may be generated from different sequences. The same is true for DMRSs in the other Figures. The DMRSs may not be mapped when, for example, a certain transmission mode is used.

By using the same allocation of the reference signals as in the existing systems, the UE can perform reception processing using the same rate matching as in the existing systems. The UE can schedule each TTI based on downlink control information (e.g. DCI) received on the PDCCH.

According to the first embodiment, as described above, since the short TTIs are in units of slots of the existing systems, the UE can perform the reception processing and measurement using the control signals, the reference signals, and the like of the existing systems, thus allowing the use of the short TTIs. Since each TTI contains the CRS, channel estimation can be performed in each TTI.

### [Second Embodiment]

In a second embodiment of the present invention, UE performs reception processing at a plurality of TTIs (two TTIs) the TTI boundary of which does not coincide with a slot boundary in one subframe of existing systems. To be more specific, in the second embodiment, the TTIs include a first TTI that starts from a symbol numbered 3 of a first slot in the one subframe of the existing systems and has a length of six symbols, and a second TTI that starts from a symbol immediately next to the first TTI and has a length of five symbols. In other words, a TTI having a length of seven symbols is not used in the second embodiment.

Figures 6A and 6B are drawings depicting examples of radio resource mapping in the TTI structure according to the second embodiment. As depicted in Figure 6A, the second embodiment uses the same resource mapping of PDCCH regions and CRSs as in the existing systems. In this case, the UE receives the CRS in each TTI. As depicted in Figure 6B, the second embodiment uses the same resource mapping of DMRSs as in the existing systems.

By using the same allocation of the reference signals as in the existing systems, the UE can perform reception processing using the same rate matching as in the existing systems. The UE can schedule each TTI based on downlink control information (e.g., DCI) received on a PDCCH.

According to the second embodiment, as described above, the UE can perform the reception processing and measurement using the control signals, the reference signals, and the like of the existing systems. Since the difference in length (in addition, the difference in the number of resource elements (REs)) between the two TTIs is smaller as compared with the first embodiment, time required for data reception processing and the like is made as uniform as possible between the TTIs. Since each TTI contains the CRS, channel estimation can be performed in each TTI.

### [Third Embodiment]

In a third embodiment of the present invention, UE performs reception processing at a plurality of TTIs each of which has a length of one symbol or two symbols, in one subframe of existing systems. To be more specific, in the third embodiment, the TTIs include TTIs having lengths of one or two symbols, using symbols except for symbols numbered 0 to 2 in a first slot in the one subframe of the existing systems.

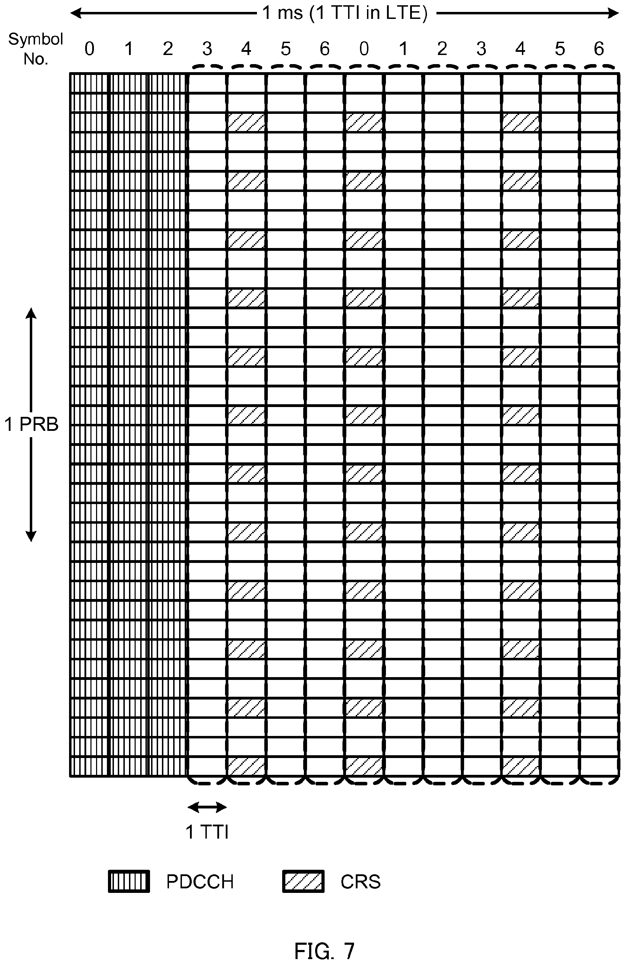

Figure 7 is a drawing depicting an example of radio resource mapping in the TTI structure according to the third embodiment. Figure 7 depicts an example in which the one subframe of the existing systems is used as a plurality of TTIs (eleven TTIs) each of which has a length of one symbol.

As depicted in Figure 7, the third embodiment uses the same resource mapping of PDCCH regions and CRSs as in the existing systems. As well as the CRSs in the existing systems, cell-specific reference signals (may be referred to as, for example, enhanced cell-specific reference signals (enhanced CRSs: eCRSs)) may be mapped. The cell-specific reference signals are preferably mapped such that the UE receives the cell-specific reference signal in each TTI.

The third embodiment can use the same resource mapping of DMRSs as in the existing systems, in a part of the TTIs. This makes it possible for the UE to perform the reception processing using the same rate matching as in the existing systems. The UE can schedule each TTI based on downlink control information (e.g., DCI) received on a PDCCH.

The number of TTIs contained in the subframe may differ from subframe to subframe (for example, depending on the type of subframe) of the existing systems. For example, a MBSFN subframe may contain twelve short TTIs, while a non-MBSFN subframe may contain eight short TTIs. In the other embodiments, the number of TTIs may be variable based on a subframe.

According to the third embodiment, as described above, since the short TTIs are in units of one slot of the existing systems, the UE can perform the reception processing and measurement using the control signals, the reference signals, and the like of the existing systems, thus allowing the use of the short TTIs. Since the length of each TTI is uniform and very short, i.e., one symbol, time required for data reception processing and the like is made as uniform and short as possible in each TTI. When each TTI contains the CRS, channel estimation can be performed in each TTI.

### [Fourth Embodiment]

In a fourth embodiment of the present invention, UE performs reception processing at a plurality of TTIs (three TTIs) the TTI boundaries of which do not coincide with a slot boundary in one subframe of existing systems. To be more specific, in the fourth embodiment, the TTIs include a first TTI that starts from a symbol numbered 2 of a first slot in the one subframe of the existing systems and has a length of four symbols, a second TTI that starts from a symbol immediately next to the first TTI and has a length of four symbols, and a third TTI that starts from a symbol immediately next to the second TTI and has a length of four symbols. In other words, the TTIs are configured in the existing subframe such that a part of an existing PDCCH region is contained in certain TTI.

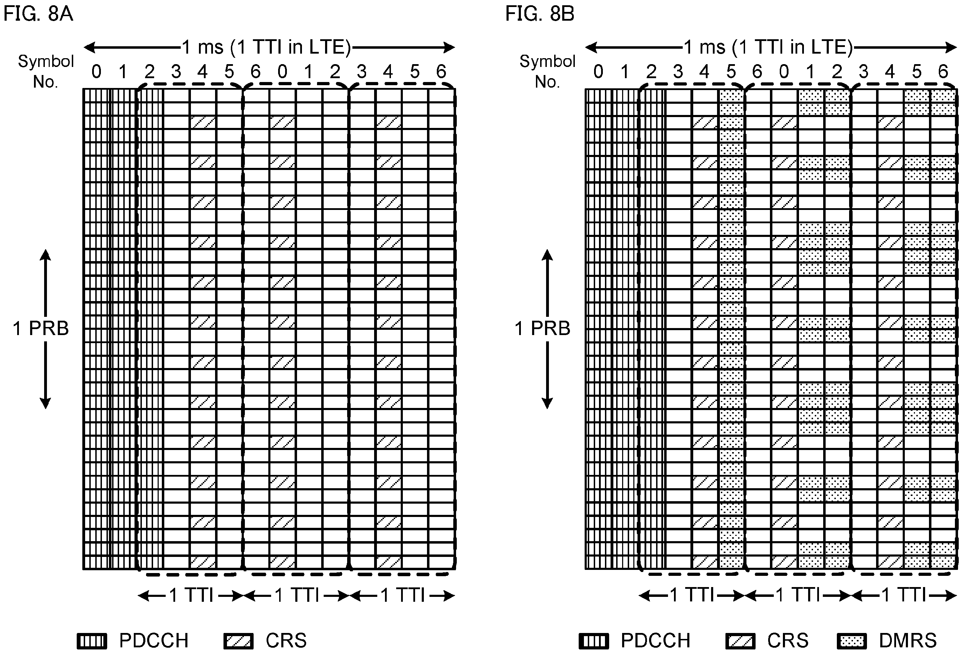

Figures 8A and 8B are drawings depicting examples of radio resource mapping in the TTI structure according to the fourth embodiment. As depicted in Figure 8A, the fourth embodiment uses the same resource mapping of PDCCH regions and CRSs as in the existing systems. In this case, the UE receives the CRS in each TTI.

The first TTI overlaps with the PDCCH region of the existing systems (at the symbol numbered 2 of the first slot). Thus, the UE determines whether or not rate matching (or puncturing) is necessary in the first TTI based on the length of symbols allocated to a control signal in the PDCCH region, and performs data reception processing in the first TTI. The UE obtains the number of symbols of the PDCCH region by monitoring a physical control format indicator channel (PCFICH) contained in the PDCCH region. The UE may obtain delivery confirmation information by monitoring a physical hybrid-ARQ indicator channel (PHICH).

The fourth embodiment can use resource mapping of DMRSs as depicted in Figure 8B. As depicted in Figure 8B, the fourth embodiment uses the same resource mapping of DMRSs as in the existing systems, in at least one of the TTIs (the third TTI). This makes it possible for the UE to perform the reception processing using the same rate matching as in the existing systems in at least a part of the TTIs.

In the first TTI, the DMRSs are mapped only to symbols numbered 5 of the first slot in the one subframe of the existing systems. The DMRSs correspond to existing DMRSs, because the existing DMRSs that are mapped to symbols numbered 5 and 6 of the first slot in the one subframe of the existing systems are remapped to the symbols numbered 5 in the direction of a frequency.

In the second TTI, the DMRSs are mapped to symbols numbered 1 and 2 of a second slot in the one subframe of the existing systems. This corresponds to new resource mapping of DMRSs that is not used in the resource mapping of DMRSs of the existing systems. The new DMRSs may be referred to as enhanced DMRSs (eDMRSs), Release-13 DMRSs, Release-14 DMRSs, and the like.

Each TTI can be scheduled based on downlink control information (e.g., DCI) received on a PDCCH.

According to the fourth embodiment, as described above, the UE can perform the reception processing and measurement using a part of the control signals, the reference signals, and the like of the existing systems, thus allowing the use of the short TTIs. Since the length of each TTI is uniform, it is possible to uniformly distribute overhead of the reference signals and almost uniform the number of data REs. Since each TTI contains the CRS, channel estimation can be performed in each TTI.

### [Fifth Embodiment]

In a fourth embodiment of the present invention, UE performs reception processing at a plurality of TTIs (three TTIs) in one subframe of existing systems. To be more specific, in the fifth embodiment, the TTIs include a first TTI that starts from a symbol numbered 3 of a first slot in the one subframe of the existing systems and has a length of four symbols, a second TTI that starts from a symbol immediately next to the first TTI and has a length of three symbols, and a third TTI that starts from a symbol immediately next to the second TTI and has a length of four symbols.

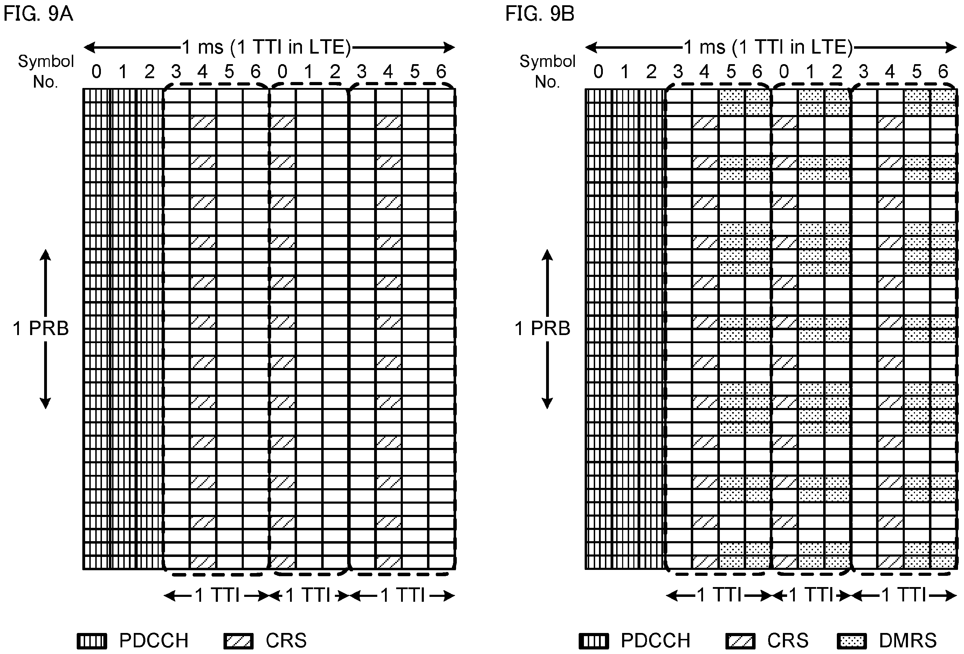

Figures 9A and 9B are drawings depicting examples of radio resource mapping in the TTI structure according to the fifth embodiment. As depicted in Figure 9A, the fifth embodiment uses the same resource mapping of PDCCH regions and CRSs as in the existing systems. In this case, the UE receives the CRS in each TTI.

In the fifth embodiment, in contrast to the fourth embodiment, the first TTI does overlap with the PDCCH region of the existing systems, thus eliminating the need for performing rate matching based on the number of symbols of the PDCCH region.

The fifth embodiment can use resource mapping of DMRSs as depicted in Figure 9B. As depicted in Figure 9B, the fifth embodiment uses the same resource mapping of DMRSs as in the existing systems, in at least two of the TTIs (the first and third TTIs). This makes it possible for the UE to perform the reception processing using the same rate matching as in the existing systems in at least a part of the TTIs.

In the second TTI, the DMRSs are mapped to symbols numbered 1 and 2 of a second slot in the one subframe of the existing systems. This corresponds to new resource mapping of DMRSs that is not used in the resource mapping of DMRSs of the existing systems.

Each TTI can be scheduled based on downlink control information (e.g., DCI) received on a PDCCH.

According to the fifth embodiment, as described above, the UE can perform the reception processing and measurement using a part of the control signals, the reference signals, and the like of the existing systems, thus allowing the use of the short TTIs. Since the length of each TTI is almost uniform, it is possible to uniformly distribute overhead of the reference signals and almost uniform the number of data REs. Since each TTI contains the CRS, channel estimation can be performed in each TTI. Since the size of the PDCCH region does not interfere with the data reception processing, it is possible to prevent an increase in implementation costs of the terminal.

Each embodiment describes the downlink TTI structure (frame structure and channel structure), but short TTIs that divide one subframe of existing systems may be used in an uplink frame. In this case, the number (division number) of the short TTIs in the one subframe of the existing systems may be the same as or different from that of a downlink frame.

### (Radio Communication System)

The structure of a radio communication system according to an embodiment of the present invention will be described below. The radio communication system performs communication by any one or combination of the radio communication methods according to the above embodiments of the present invention.

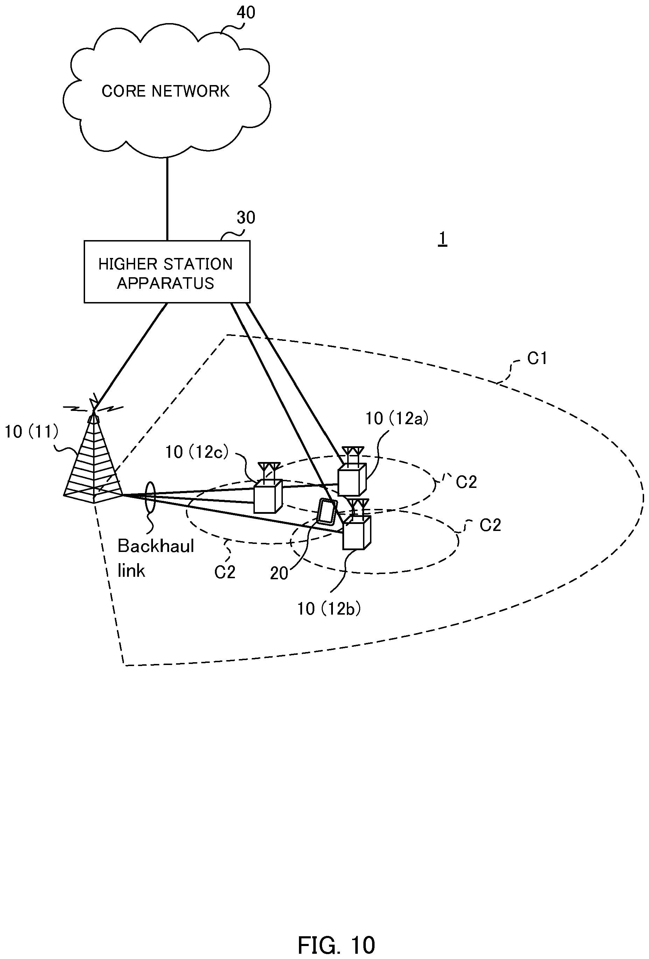

Figure 10 is a drawing depicting an example of the schematic structure of the radio communication system according to the embodiment of the present invention. A radio communication system 1 can use Carrier Aggregation (CA) and/or Dual Connectivity (DC) to aggregate multiple basic frequency blocks (component carriers) in units of a system bandwidth (e.g. 20 MHz) of an LTE system.

The radio communication system 1 may be referred to as Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), or the like, or a system realizing the above.

As depicted in Figure 10, the radio communication system 1 includes a radio base station 11 for forming a macro cell C1 having a relatively large coverage area, and radio base stations 12 (12a to 12c) disposed in the macro cell C1, for forming small cells C2 smaller than the macro cell C1. A user terminal 20 is disposed in the macro cell C1 and the small cells C2.

The user terminal 20 is connectable to both of the radio base stations 11 and 12. It is assumed that the user terminal 20 concurrently uses the macro cell C1 and the small cells C2 by CA or DC. The user terminal 20 may apply CA or DC using a plurality of cells (e.g. five or less CCs, or six or more CCs).

The user terminal 20 can communicate with the radio base station 11 using a narrow band carrier (referred to as an existing carrier, a legacy carrier, and the like) in a relatively low frequency band (for example, 2 GHz). On the other hand, the user terminal 20 may communicate with the radio base stations 12 using wide band carriers in relatively high frequency bands (for example, 3.5 GHz, 5 GHz, and the like), or using the same carrier as for the radio base station 11. The structure of the frequency band used in each radio base station is not limited thereto.

The radio base stations 11 and 12 (or the two radio base stations 12) are connected with wires e.g. CPRI (Common Public Radio Interface)-compliant optical fibers or X2 interfaces, or connected wirelessly.

Each of the radio base stations 11 and 12 is connected to a higher station apparatus 30, and connected to a core network 40 through the higher station apparatus 30. The higher station apparatus 30 includes, for example, an access gateway, a radio network controller (RNC), a mobility management entity (MME), and the like, but is not limited thereto. Each radio base station 12 may be connected to the higher station apparatus 30 through the radio base station 11.

The radio base station 11 is a radio base station having a relatively large coverage area, and may be also referred to as a macro base station, an aggregation node, an eNodeB (eNB), a transmission and reception point, and the like. The radio base station 12 is a radio base station having a local coverage area, and may be also referred to as a small base station, a micro base station, a pico base station, a femto base station, a Home eNodeB (HeNB), a remote radio head (RRH), a transmission and reception point, and the like. The radio base stations 11 and 12 are collectively called radio base stations 10 below, when not distinguishing therebetween.

Each user terminal 20 is a terminal compliant to any of various communication schemes such as LTE and LTE-A, and may be a stationary communication terminal, as well as a mobile communication terminal.

The radio communication system 1 adopts Orthogonal Frequency Division Multiple Access (OFDMA) in a downlink, and Single Carrier Frequency Division Multiple Access (SC-FDMA) in a uplink, as radio access schemes. OFDMA is a multicarrier transmission scheme in which a frequency band is divided into narrow frequency bands (subcarriers) and communication is performed by mapping data to each subcarrier. SC-FDMA is a single carrier transmission scheme in which a system bandwidth is divided on a terminal-by-terminal basis into bands each of which is constituted of one or two or more continuous resource blocks, and terminals use the band different from each other in order to reduce interference between the terminals. The uplink and downlink radio access schemes are not limited to this combination.

The radio communication system 1 uses a physical downlink shared channel (PDSCH) shared among user terminals 20, a physical broadcast channel (PBCH), downlink L1/L2 control channels, and the like as downlink channels. User data, higher layer control information, system information blocks (SIBs), and the like are transmitted on the PDSCH. A master information block (MIB) is transmitted on the PBCH.

The downlink L1/L2 control channels include a physical downlink control channel (PDCCH), an enhanced physical downlink control channel (EPDCCH), a physical control format indicator channel (PDFICH), a physical hybrid-ARQ indicator channel (PHICH), and the like. Downlink control information (DCI) including scheduling information on the PDSCH and the PUSCH, and the like are transmitted on the PDCCH. The number of OFDM symbols used on the PDCCH is transmitted on the PCFICH. Delivery confirmation information (also referred to as, for example, retransmission control information, HARQ-ACK, ACK/NACK, and the like) on a hybrid automatic repeat request (HARQ) for the PUSCH is transmitted on the PHICH. The EPDCCH is frequency division multiplexed with the physical downlink shared channel (PDSCH), and used for transmitting the DCI, just as with the PDCCH.

The radio communication system 1 uses a physical uplink shared channel (PUSCH) shared among user terminals 20, a physical uplink control channel (PUCCH), a physical random access channel (PRACH), and the like as uplink channels. User data and higher layer control information are transmitted on the PUSCH. A downlink channel quality indicator (CQI), delivery confirmation information, and the like are transmitted on the PUCCH. A random access preamble for establishing connection with cells is transmitted on the PRACH.

In the radio communication system 1, a cell-specific reference signal (CRS), a channel state information-reference signal (CSI-RS), a demodulation reference signal (DMRS), a positioning reference signal (PRS), and the like are transmitted as downlink reference signals. In the radio communication system 1, a sounding reference signal (SRS), a demodulation reference signal (DMRS), and the like are transmitted as uplink reference signals. The DMRS may be referred to as a UE-specific reference signal. Reference signals to be transmitted are not limited thereto.

### (Radio Base Station)

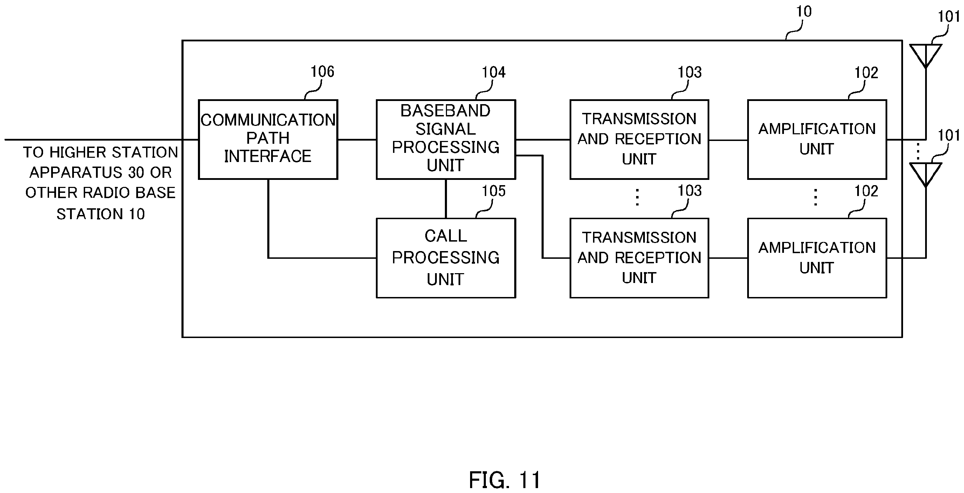

Figure 11 is a drawing depicting an example of the entire configuration of a radio base station according to an embodiment of the present invention. The radio base station 10 includes transmission and reception antennas 101, amplification units 102, transmission and reception units 103, a baseband signal processing unit 104, a call processing unit 105, and a communication path interface 106. The numbers of the transmission and reception antennas 101, the amplification units 102, and the transmission and reception units 103 are not limited as long as they are one or more.

User data to be transmitted from the radio base station 10 to the user terminal 20 on a downlink is inputted from the higher station apparatus 30 to the baseband signal processing unit 104 through the communication path interface 106.

The baseband signal processing unit 104 applies transmission processing, which includes radio link control (RLC) layer transmission processing such as packet data convergence protocol (PDCP) layer processing, the division and coupling of the user data, and RLC retransmission control, medium access control (MAC) retransmission control (e.g. HARQ transmission processing), scheduling, a choice of a transmission format, channel encoding, inverse fast Fourier transform (IFFT) processing, precoding, and the like, to the user data, and transfer the processed user data to the transmission and reception units 103. The baseband signal processing unit 104 also applies transmission processing including channel encoding, IFFT processing, and the like to a downlink control signal, and transfers the processed downlink control signal to the transmission and reception units 103.

The transmission and reception unit 103 converts the baseband signal, which is pre-coded and outputted from the baseband signal processing unit 104 on an antenna-by-antenna basis, into a signal in a radio frequency band, and transmits the converted signal. The radio frequency signal that is frequency-converted by the transmission and reception unit 103 is amplified by the amplification unit 102, and transmitted from the transmission and reception antenna 101. The transmission and reception unit 103 is constituted of a combination of a transmitter and a receiver, a transmission and reception circuit, or a transmission and reception device that is described based on common knowledge in the technical art of the present invention. The transmission and reception unit 103 may be constituted of an integral transceiver unit, or a transmission unit and a reception unit.

As for an uplink signal, on the other hand, a radio frequency signal received by the transmission and reception antenna 101 is amplified by the amplification unit 102. The transmission and reception unit 103 receives the uplink signal amplified by the amplification unit 102. The transmission and reception unit 103 frequency-converts the reception signal into a baseband signal, and outputs the baseband signal to the baseband signal processing unit 104.

The baseband signal processing unit 104 applies fast Fourier transform (FFT) processing, inverse discrete Fourier transform (IDFT) processing, error correction decoding, reception processing for MAC retransmission control, and reception processing of a PLC layer and a PDCP layer to user data included in the inputted uplink signal. The processed uplink signal is transferred to the higher station apparatus 30 through the communication path interface 106. The call processing unit 105 performs call processing such as settings and release of communication channels, state management of the radio base station 10, and management of radio resources.

The communication path interface 106 transmits and receives signals to and from the higher station apparatus 30 through a certain interface. The communication path interface 106 may transmit and receive (backhaul signaling) signals to and from another radio base station through an interface (e.g., a common public radio interface (CPRI)-compliant optical fiber or an X2 interface) between the radio base stations.

The transmission and reception unit 103 transmits downlink control information (e.g. DCI) related to data transmission and/or reception to the user terminal 20. For example, the transmission and reception unit 103 may transmit reception command information (a DL grant) on a physical downlink shared channel (PDSCH). The transmission and reception unit 103 may transmit transmission command information (a UL grant) on a physical uplink shared channel (PUSCH).

The transmission and reception unit 103 transmits downlink data (PDSCH) at certain short TTIs determined by a control unit 301. The transmission and reception unit 103 may transmit HARQ-ACK for uplink data (PUSCH). The transmission and reception unit 103 may transmit information related to the structure of the short TTIs.

The transmission and reception unit 103 receives uplink data from the user terminal 20 on an uplink shared channel (e.g., PUSCH). The transmission and reception unit 103 may receive HARQ-ACK for downlink data transmitted on a downlink shared channel (PDSCH) based on the DCI.

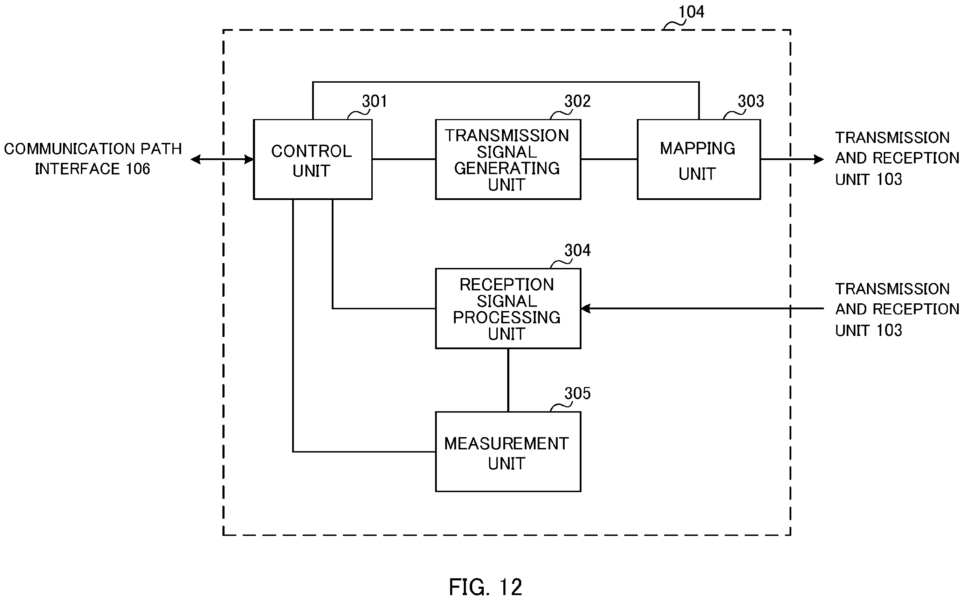

Figure 12 is a drawing depicting an example of the functional configuration of the radio base station according to an embodiment of the present invention. Figure 12 mainly depicts functional blocks that are features of the embodiment, and the radio base station 10 has other functional blocks required for radio communication. As depicted in Figure 12, the baseband signal processing unit 104 includes at least the control unit (scheduler) 301, a transmission signal generation unit 302, a mapping unit 303, a reception signal processing unit 304, and a measurement unit 305.

The control unit (scheduler) 301 controls the entire radio base station 10. The control unit 301 is constituted of a controller, a control circuit, or a control device that is described based on common knowledge in the technical art of the present invention.

The control unit 301 controls, for example, the transmission signal generation unit 302 to generate signals and the mapping unit 303 to allocate the signals. The control unit 301 controls the reception signal processing unit 304 to perform signal reception processing and the measurement unit 305 to perform measurement of signals.

The control unit 301 controls scheduling (for example, resource allocation) of system information, downlink data signals to be transmitted on a PDSCH, and downlink control signals to be transmitted on a PDCCH or an EPDCCH. The control unit 301 controls scheduling of synchronization signals (primary synchronization signal (PSS)/ secondary synchronization signal (SSS)), and downlink reference signals including a CRS, a CSI-RS, a DMRS, and the like.

The control unit 301 controls scheduling of uplink data signals to be transmitted on a PUSCH, uplink control signals (e.g., delivery confirmation information) to be transmitted on a PUCCH and/or a PUSCH, a random access preamble to be transmitted on a PRACH, uplink reference signals, and the like.

The control unit 301 determines the structures of TTIs (structures of short TTIs) to be used in a unit of each subframe of existing systems. For example, the control unit 301 may determine the structures of TTIs to be used, based on feedback information from the user terminal 20, a traffic state, and the like, and update parameters for control of transmission and/or reception at the short TTIs.

The control unit 301 may notify the user terminal 20 of information (e.g., start symbols of the short TTIs, the numbers of symbols, the number of PRBs, and the like) about the structures of the short TTIs by higher layer signaling (e.g., RRC signaling), downlink control information, or a combination thereof. For example, the control unit 301 may notify the user terminal 20 of information related to correspondence relationship between the structures of short TTIs and certain indexes (TTI structure indexes) by the higher layer signaling, and notify of TTI structure indexes that correspond to the structures of the TTIs of the subframe in a PDCCH region of each subframe as DCI.

The control unit 301 controls such that various signals are transmitted at the short TTIs (based on the determined structures of the short TTIs) in at least downlink communication (downlink transmission). To be more specific, the control unit 301 controls such that reference signals and data are transmitted in at least one of a plurality of TTIs (each TTI has a TTI length of less than 1 ms) contained in the one subframe of the existing systems. The control unit 301 may control such that various signals are received at the short TTIs in uplink communication (uplink transmission).

The control unit 301 controls such that a cell-specific reference signal (CRS) is mapped to a radio resource (CRS resource) in which the CRS is allocated in the existing systems, and transmitted in each short TTI. The control unit 301 controls such that a demodulation reference signal (DMRS) is mapped to a radio resource (DMRS resource) in which the DMRS is allocated in the existing systems, and transmitted in at least one of the short TTIs. For example, the control unit 301 can control the allocation of the control signals, the reference signals, and the data signals based on radio resource mapping depicted in at least one of Figures 5A to 9B.

Taking Figures 9A and 9B as an example, the control unit 301 uses a downlink frame structure including a first TTI that starts from a symbol numbered 3 of a first slot and has a length of four symbols, a second TTI that starts from a symbol immediately next to the first TTI and has a length of three symbols, and a third TTI that starts from a symbol immediately next to the second TTI and has a length of four symbols, as a plurality of short TTIs contained in one subframe of existing systems.

The frame structure may be defined as a downlink frame structure including a first TTI that starts from a symbol numbered 3 of a first slot in one subframe of existing systems and has a length of four symbols, a second TTI that starts from a symbol numbered 0 of a second slot in the one subframe of the existing systems and has a length of three symbols, and a third TTI that starts from a symbol numbered 3 of the second slot in the one subframe of the existing systems and has a length of four symbols, as a plurality of short TTIs.

The frame structure may be defined as a downlink frame structure including a first TTI that is constituted of symbols numbered 3 to 6 of a first slot in one subframe of existing systems, a second TTI that is constituted of symbols numbered 0 to 2 of a second slot in the one subframe of the existing systems, and a third TTI that is constituted of symbols numbered 3 to 6 of the second slot in the one subframe of the existing systems, as a plurality of short TTIs. Other structures of TTIs (frame structures) can be reworded in the same manner.

In a frame constituted of three TTIs having lengths of four symbols, as depicted in Figure 8B, the control unit 301 may control mapping such that the first TTI contains a demodulation reference signal in the last symbol when containing the demodulation reference signal, the second TTI contains a demodulation reference signal in the last two symbols, not in the first symbol, when containing the demodulation reference signal, and the third TTI contains a demodulation reference signal in the last two symbols when containing the demodulation reference signal.

In a frame constituted of three TTIs having lengths of four symbols, as depicted in, for example, Figures 8A and 8B, when a physical downlink control channel (PDCCH) is allocated to the first symbol of the first TTI, the control unit 301 controls so as to apply rate matching to data of the first TTI in consideration of the first symbol.

In a subframe constituted of TTIs having a length of four symbols, a length of three symbols, and a length of four symbols, as depicted in Figures 9B, when each TTI contains a demodulation reference signal, the control unit 301 controls mapping such that each of the first, second, and third TTIs contains the demodulation reference signal in the last two symbols.

The control unit 301 controls such that downlink control information (scheduling information) for scheduling at least one of short TTIs is transmitted to the user terminal 20 in a PDCCH region of the existing systems and/or on an EPDCCH in the first short TTI of each subframe.

The transmission signal generation unit 302 generates downlink signals (downlink control signals, downlink data signals, downlink reference signals, and the like) based on commands from the control unit 301, and outputs the generated signals to the mapping unit 303. The transmission signal generation unit 302 is constituted of a signal generator, a signal generation circuit, or a signal generation device that is described based on common knowledge in the technical art of the present invention.

The transmission signal generation unit 302 generates, for example, a DL assignment for indicating information about allocation of downlink signals and an UL grant for indicating information about allocation of uplink signals, based on commands from the control unit 301. Encoding processing and modulation processing are applied to downlink data signals in accordance with a code rate, a modulation scheme, and the like determined based on channel state information (CSI) from each user terminal 20.

The mapping unit 303 maps the downlink signals generated by the transmission signal generation unit 302 to certain radio resources based on commands from the control unit 301, and outputs the mapped signals to the transmission and reception unit 103. The mapping unit 303 is constituted of a mapper, a mapping circuit, or a mapping device that is described based on common knowledge in the technical art of the present invention.

The reception signal processing unit 304 applies reception processing (for example, demapping, demodulation, decoding, and the like) to reception signals inputted from the transmission and reception units 103. The reception signals include, for example, uplink signals (uplink control signals, uplink data signals, uplink reference signals, and the like) transmitted from the user terminal 20. The reception signal processing unit 304 is constituted of a signal processor, a signal processing circuit, or a signal processing device that is described based on common knowledge in the technical art of the present invention.

The reception signal processing unit 304 outputs information decoded by the reception processing to the control unit 301. For example, when receiving HARQ-ACK on a PUCCH, the reception signal processing unit 304 outputs the HARQ-ACK to the control unit 301. The reception signal processing unit 304 outputs the reception signals and the signals after the reception processing to the measurement unit 305.

The measurement unit 305 performs measurement on the received signals. The measurement unit 305 is constituted of a measurement instrument, a measurement circuit, or a measurement device that is described based on common knowledge in the technical art of the present invention.

The measurement unit 305 may measure, for example, reference signal received power (RSRP), reference signal received quality (RSRQ), a channel state, and the like. Measurement results may be outputted to the control unit 301.

### (User Terminal)

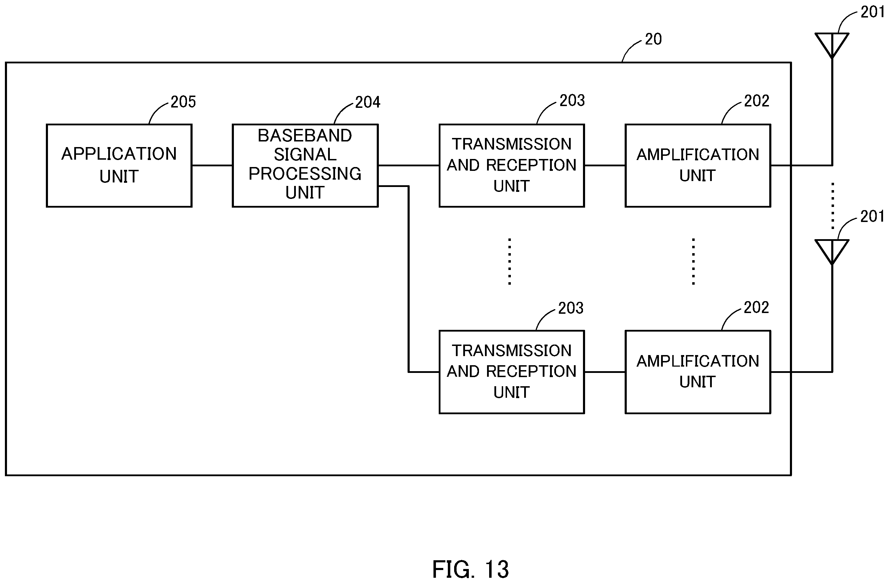

Figure 13 is a drawing depicting an example of the entire configuration of a user terminal according to an embodiment of the present invention. The user terminal 20 includes transmission and reception antennas 201, amplification units 202, transmission and reception units 203, a baseband signal processing unit 204, and an application unit 205. The number of the transmission and reception antennas 201, the amplification units 202, and the transmission and reception units 203 are not limited as long as they are one or more.

A radio frequency signal received by the transmission and reception antenna 201 is amplified by the amplification unit 202. The transmission and reception unit 203 receives the downlink signal amplified by the amplification unit 202. The transmission and reception unit 203 frequency-converts the reception signal into a baseband signal, and outputs the baseband signal to the baseband signal processing unit 204. The transmission and reception unit 203 is constituted of a combination of a transmitter and a receiver, a transmission and reception circuit, or a transmission and reception device that is described based on common knowledge in the technical art of the present invention. The transmission and reception unit 203 may be constituted of an integral transceiver unit, or a transmission unit and a reception unit.

The baseband signal processing unit 204 applies FFT processing, error correction decoding, reception processing for retransmission control, and the like to the inputted baseband signal. The processed downlink user data is transferred to the application unit 205. The application unit 205 performs processing related to higher layers than a physical layer and a MAC layer. Broadcast information of the downlink data is also transferred to the application unit 205.

On the other hand, uplink user data is inputted from the application unit 205 to the baseband signal processing unit 204. The baseband signal processing unit 204 applies transmission processing for retransmission control (e.g., HARQ transmission processing), channel coding, precoding, discrete Fourier transform (DFT) processing, IFFT processing, and the like to the user data, and transfers the processed user data to the transmission and reception unit 203. The transmission and reception unit 203 converts the baseband signal outputted from the baseband signal processing unit 204 into a signal in a radio frequency band, and transmits the converted signal. The radio frequency signal that is frequency-converted by the transmission and reception unit 203 is amplified by the amplification unit 202, and transmitted from the transmission and reception antenna 201.

The transmission and reception unit 203 transmits uplink data to the radio base station 10 on an uplink shared channel (e.g., PDSCH). The transmission and reception unit 203 may transmit HARQ-ACK for downlink data transmitted on a downlink shared channel (PDSCH) based on DCI.

The transmission and reception unit 203 receives downlink data (e.g., DCI) related to data transmission and/or reception from the radio base station 10. For example, the transmission and reception unit 203 may receive reception command information (a DL grant) on a physical downlink shared channel (PDSCH). The transmission and reception unit 203 may receive transmission command information (a UL grant) on a physical uplink shared channel (PUSCH).

The transmission and reception unit 203 receives downlink data at certain short TTIs determined by a control unit 401. The transmission and reception unit 203 may transmit HARQ-ACK for uplink data (PUSCH). The transmission and reception unit 203 may transmit information related to the structure of the short TTIs.

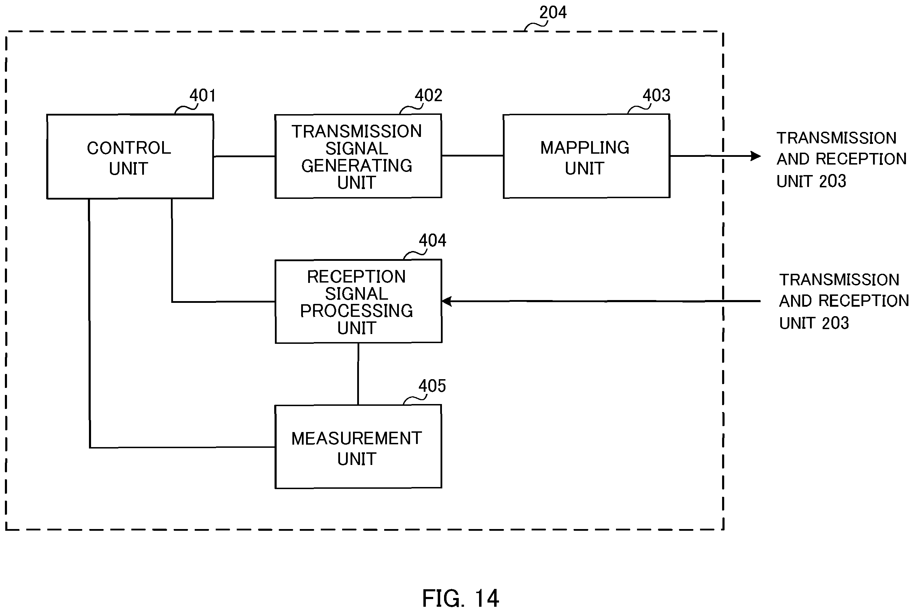

Figure 14 is a drawing depicting an example of the functional configuration of the user terminal according to an embodiment of the present invention. Figure 14 mainly depicts functional blocks that are features of the embodiment, and the user terminal 20 has other functional blocks required for radio communication. As depicted in Figure 14, the baseband signal processing unit 204 of the user terminal 20 includes at least the control unit 401, a transmission signal generation unit 402, a mapping unit 403, a reception signal processing unit 404, and a measurement unit 405.

The control unit 401 controls the entire user terminal 20. The control unit 401 is constituted of a controller, a control circuit, or a control device that is described based on common knowledge in the technical art of the present invention.

The control unit 401 controls, for example, the transmission signal generation unit 402 to generate signals and the mapping unit 403 to allocate the signals. The control unit 401 controls the reception signal processing unit 404 to perform signal reception processing and the measurement unit 405 to perform measurement of signals.

The control unit 401 receives downlink control signals (signals transmitted on a PDCCH/EPDCCH) and downlink data signals (signals transmitted on a PDSCH) transmitted from the radio base stations 10 through the reception signal processing unit 404. The control unit 401 controls generation of uplink control signals (e.g., delivery confirmation information) and uplink data signals based on a determination result of necessity for retransmission control for the downlink control signals and the downlink data signals.

The control unit 401 determines the structures of TTIs (structures of short TTIs) to be used in a unit of each subframe of existing systems. For example, when the control unit 401 receives information about the structures of the short TTIs, the control unit 401 may determine the structures of TTIs to be used based on the information, and may update parameters for control of transmission and/or reception at the short TTIs.

The control unit 401 controls such that various signals are received at the short TTIs (based on the determined structures of the short TTIs) in at least downlink communication (downlink transmission). To be more specific, the control unit 401 controls such that reference signals and data are received in at least one of the TTIs (each TTI has a TTI length of less than 1 ms) contained in the one subframe of the existing systems. The control unit 401 may control such that various signals are transmitted at the short TTIs in uplink communication (uplink transmission).

The control unit 401 controls such that a cell-specific reference signal (CRS) is mapped to a radio resource (CRS resource) in which the CRS is allocated in the existing systems, and received in each short TTI. The control unit 401 controls such that a demodulation reference signal (DMRS) is mapped to a radio resource (DMRS resource) in which the DMRS is allocated in the existing systems, and received in at least one of the short TTIs. For example, the control unit 401 can control such that the control signals, the reference signals, and the data signals are received based on radio resource mapping depicted in at least one of Figures 5A to 9B.

Taking Figures 9A and 9B as an example, the control unit 401 can control reception processing under the assumption of a downlink frame structure that includes a first TTI that starts from a symbol numbered of a first slot and has a length of four symbols, a second TTI that starts from a symbol immediately next to the first TTI and has a length of three symbols, and a third TTI that starts from a symbol immediately next to the second TTI and has a length of four symbols, as a plurality of short TTIs contained in the one subframe of the existing systems.

In a frame constituted of three TTIs having lengths of four symbols, as depicted in Figure 8B, the control unit 401 may control reception processing on the assumption that the first TTI contains a demodulation reference signal in the last symbol when containing the demodulation reference signal, the second TTI contains a demodulation reference signal in the last two symbols, not in the first symbol, when containing the demodulation reference signal, and the third TTI contains a demodulation reference signal in the last two symbols when containing the demodulation reference signal.

In a frame constituted of three TTIs having lengths of four symbols, as depicted in, for example, Figures 8A and 8B, when a physical downlink control channel (PDCCH) is allocated to the first symbol of the first TTI, the control unit 401 controls reception processing so as to apply rate matching to data of the first TTI in consideration of the first symbol.

In a frame constituted of TTIs having a length of four symbols, a length of three symbols, and a length of four symbols, as depicted in Figures 9B, when each TTI contains a demodulation reference signal, the control unit 401 controls reception processing under the assumption that each of the first, second, and third TTIs contains the demodulation reference signal in the last two symbols.

The control unit 401 controls such that downlink control information (scheduling information) for scheduling at least one of short TTIs is received in a PDCCH region of the existing systems and/or on an EPDCCH in the first short TTI of each subframe. The control unit 401 controls such that data transmission and/or reception corresponding to downlink control information (e.g., DCI) received from the reception signal processing unit 404 are performed in certain short TTIs (scheduled TTIs).

The transmission signal generation unit 402 generates uplink signals (uplink control signals, uplink data signals, uplink reference signals, and the like) based on commands from the control unit 401, and outputs the generated signals to the mapping unit 403. The transmission signal generation unit 402 is constituted of a signal generator, a signal generation circuit, or a signal generation device that is described based on common knowledge in the technical art of the present invention.

The transmission signal generation unit 402 generates, for example, uplink control signals related to delivery confirmation information and channel state information (CSI), based on commands from the control unit 401. The transmission signal generation unit 402 generates uplink data signals based on commands from the control unit 401. For example, when downlink control signals issued from the radio base station 10 include an UL grant, the control unit 401 commands the transmission signal generation unit 402 to generate the uplink data signals.

The mapping unit 403 maps the uplink signals generated by the transmission signal generation unit 402 to radio resources based on commands from the control unit 401, and outputs the mapped signals to the transmission and reception unit 203. The mapping unit 403 is constituted of a mapper, a mapping circuit, or a mapping device that is described based on common knowledge in the technical art of the present invention.

The reception signal processing unit 404 applies reception processing (for example, demapping, demodulation, decoding, and the like) to reception signals inputted from the transmission and reception units 203. The reception signals include, for example, downlink signals (downlink control signals, downlink data signals, downlink reference signals, and the like) transmitted from the radio base station 10. The reception signal processing unit 404 is constituted of a signal processor, a signal processing circuit, or a signal processing device that is described based on common knowledge in the technical art of the present invention. The reception signal processing unit 404 constitutes a reception unit according to the present invention.

The reception signal processing unit 404 performs blind decoding of DCI (DCI format) for scheduling transmission and/or reception of certain TTI data (transport block (TTB)), based on a command from the control unit 401. For example, the reception signal processing unit 404 may decode the DCI by demasking using a certain radio network temporary identifier (RNTI), or under assumption of a certain payload size.

When a downlink control channel is allocated to the first symbol of the first short TTI in the one subframe of the existing systems, the reception signal processing unit 404 may perform data reception by applying rate matching to data of the first short TTI based on a command from the control unit 401.

The reception signal processing unit 404 outputs information decoded by the reception processing to the control unit 401. For example, the reception signal processing unit 404 outputs broadcast information, system information, RRC signaling, DCI, and the like to the control unit 401. The reception signal processing unit 404 outputs the reception signals and the signals after the reception processing to the measurement unit 405.

The measurement unit 405 performs measurement on the received signals. The measurement unit 405 is constituted of a measurement instrument, a measurement circuit, or a measurement device that is described based on common knowledge in the technical art of the present invention.

The measurement unit 405 may measure, for example, reference signal received power (RSRP), reference signal received quality (RSRQ), a channel state, and the like. The measurement unit 405 may perform measurement using, for example, a reference signal (e.g., CRS) transmitted from the radio base station 10 in the short TTI. Measurement results may be outputted to the control unit 301.

The block diagrams used in the above embodiments depict functional blocks. The functional blocks (elements) are realized by an arbitrary combination of hardware and software. A method for realizing each functional block is not specifically limited. In other words, each functional block may be realized by physically integrated one device, or two or more physically separated devices connected with or without wires.

For example, a part or all of each function of the radio base station 10 and the user terminal 20 may be realized by hardware such as an application specific integrated circuit (ASIC), a programmable logic device (PLD), and a field programmable gate array (FPGA). Each of the radio base station 10 and the user terminal 20 may be realized by a computer device including a central processing unit (CPU), a communication interface for network connection, a memory, a computer-readable recording medium for storing programs therein. In other words, the radio base station, the user terminal, and the like according to an embodiment of the present invention may function as computers that execute a radio communication method according to the present invention.

The processor, the memory, and the like are connected through a bus for communicating information. The computer-readable recording medium is a recording medium such as, for example, a flexible disk, a magneto-optical disk, a read only memory (ROM), an erasable programmable ROM (EPROM), a compact disc-ROM (CD-ROM), a random access memory (RAM), and a hard disk. The programs may be transmitted from a network through electric communication lines. Each of the radio base station 10 and the user terminal 20 may include an input device such as an input key, and an output device such as a display.

The functional configurations of the radio base station 10 and the user terminal 20 may be realized by the above hardware, software modules executed by the processor, or a combination of the both of the hardware and the software modules. The processor controls the entire user terminal by executing an operating system. The processor loads the programs, the software modules, and data from the recording medium, and executes various types of processing in accordance with the programs, the software modules, and the data.

The programs are not specifically limited as long as the programs make the computers to execute the operations described in each of the above embodiments. For example, the control unit 401 of the user terminal 20 may be realized by a control program executed by the processor, and other functional blocks may be realized in the same manner.

The software, commands, and the like may be transmitted and received through a transmission medium. For example, when the software is transmitted from a website, a server, or another remote source using wired communication technology such as a coaxial cables, an optical fiber cable, a twisted-pair cable, and a digital subscriber line (DSL) and/or wireless communication technology such as infrared rays, radio, and microwaves, the wired and/or wireless communication technology is included in the definition of the transmission medium.

The terms described in this application and/or the terms required for understanding this application may be replaced with other terms that refer to the same or similar meanings. For example, the term "channel" and/or "symbol" may be replaced with the term "signal (signaling)". The term "signal" may be replaced with the term "message". The term "component carrier (CC)" may be replaced with the term "frequency carrier", "carrier frequency", "cell", or the like.

The information, parameters, and the like described in this application may be represented in absolute values, relative values with respect to a certain value, or other information corresponding thereto. For example, the radio resources may be indicated by indexes.

The information, signals, and the like described in this application may be represented by using any of various different techniques. For example, the data, instructions, commands, information, signals, bits, symbols, chips, and the like mentioned and obtained in the whole of the above description may be represented by voltages, currents, electromagnetic waves, magnetic fields or magnetic particles, optical fields or photons, or arbitrary combinations thereof.

The aspects or embodiments described in this application may be used alone, in combination, or by switching in accordance with execution. Notification about certain information (for example, notification about being "X") is not limited to be explicit, and may be implicit (for example, without the notification about certain information).

Notification about information is not limited to the aspects or embodiments described in this application, but may be performed in another way. For example, the notification about information may be performed by physical layer signaling (e.g., downlink control information (DCI) and uplink control information (UCI)), higher layer signaling (e.g., radio resource control (RRC), medium access control (MAC) signaling, broadcast information (master information block (MIB) and system information block (SIB)), another signal, or a combination thereof. The RRC signaling may be referred to as an RRC message, and may be, for example, an RRC Connection Setup message, an RRC Connection Reconfiguration message, or the like.

Each aspect or embodiment described in this application may be applied to systems using Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), CDMA2000, Ultra Mobile Broadband (UMB), IEEE 802.11 (Wi-Fi (trademark)), IEEE 802.16 (WiMAX (trademark)), IEEE 802.20, Ultra-WideBand (UWB), Bluetooth (trademark), and other appropriate systems, and/or next generation systems extended based thereon.

The processing procedure, sequence, flowchart, and the like of each aspect or embodiment described in this application may be permuted as long as there is no compatibility. For example, as to the method described in this application, various steps are proposed in an exemplary order, and are not limited to a specific proposed order.

The present invention is described above in detail, but as a matter of course, it is apparent for those skilled in the art that the present invention is not limited to the embodiments described in this application. The present invention can be modified and embodied in other forms without departing from the intent and scope of the present invention defined by claims. Therefore, this application is intended to exemplarily describe the present invention, and has no limitation to the present invention.

The disclosure of Japanese Patent Application No. 2015-173257, filed on September 2, 2015, including the specification, drawings and abstract, is incorporated herein by reference in its entirety.

## Claims

1. A user terminal comprising:
a control unit for determining structures of a plurality of transmission time intervals (TTIs) contained in one subframe of an existing system; and
a reception unit for receiving a reference signal and data in at least one of the TTIs, wherein
the reception unit receives a cell-specific reference signal in each of the TTIs using a radio resource to which the cell-specific reference signal is allocated in the existing system.

2. The user terminal according to claim 1, wherein the reception unit receives a demodulation reference signal in at least one of the TTIs using a radio resource to which the demodulation reference signal is allocated in the existing system.

3. The user terminal according to claim 1 or 2, wherein the plurality of TTIs include a first TTI starting from a symbol numbered 3 of a first slot in the one subframe of the existing system and having a length of six symbols, and a second TTI starting from a symbol immediately next to the first TTI and having a length of five symbols.

4. The user terminal according to claim 1 or 2, wherein the plurality of TTIs include a first TTI starting from a symbol numbered 2 of a first slot in the one subframe of the existing system and having a length of four symbols, a second TTI starting from a symbol immediately next to the first TTI and having a length of four symbols, and a third TTI starting from a symbol immediately next to the second TTI and having a length of four symbols.

5. The user terminal according to claim 4, wherein
when containing a demodulation reference signal, the first TTI contains the demodulation reference signal in the last symbol,
when containing a demodulation reference signal, the second TTI contains the demodulation reference signal in the last two symbols, not in the first symbol, and
when containing a demodulation reference signal, the third TTI contains the demodulation reference signal in the last two symbols.

6. The user terminal according to claim 4 or 5, wherein when a first symbol of the first TTI is allocated to a downlink control channel, the reception unit receives data of the first TTI by applying rate matching.

7. The user terminal according to claim 1 or 2, wherein the plurality of TTIs include a first TTI starting from a symbol numbered 3 of a first slot in the one subframe of the existing system and having a length of four symbols, a second TTI starting from a symbol immediately next to the first TTI and having a length of three symbols, and a third TTI starting from a symbol immediately next to the second TTI and having a length of four symbols.

8. The user terminal according to claim 7, wherein when containing a demodulation reference signal, any one of the first TTI, the second TTI, and the third TTI contains the demodulation reference signal in the last two symbols.

9. A radio base station comprising:
a control unit for controlling such that a reference signal and data are transmitted in at least one of a plurality of transmission time intervals (TTIs) contained in one subframe of an existing system; and
a mapping unit for mapping a cell-specific reference signal to a radio resource to which the cell-specific reference signal is allocated in the existing system.

10. A radio communication method comprising:
a control step for determining the structures of a plurality of transmission time intervals (TTIs) contained in one subframe of an existing system; and
a reception step for receiving a reference signal and data in at least one of the TTIs, wherein
in the reception step, a cell-specific reference signal is received in each of the TTIs using a radio resource to which the cell-specific reference signal is allocated in the existing system.
